# EUROPEAN PATENT SPECIFICATION

(11) **EP 2 001 190 B1**
(45) Date of publication and mention of the grant of the patent: **25.08.2010**
(21) Application number: 07710929.6
(22) Date of filing: 13.02.2007
(51) Int. Cl.: H04L 29/06

(54) **MEASURING METHOD FOR NETWORK PERFORMANCE AND SYSTEM THEREOF**
MESSVERFAHREN ZUR NETZ-LEISTUNGSFÄHIGKEIT UND SYSTEM HIERFÜR
PROCÉDÉ DE MESURE DE PERFORMANCES RÉSEAU ET SYSTÈME ASSOCIÉ

(30) Priority: 14.04.2006 CN 200610076980
(43) Date of publication of application: 10.12.2008
(73) Proprietor: Huawei Technologies Co., Ltd., Longgang District, Shenzhen Guangdong 518129 (CN)
(72) Inventor: YANG, Daoyan, Shenzhen, Guangdong 518219 (CN)
(74) Representative: Thun, Clemens
(86) International application number: PCT/CN2007/000504
(87) International publication number: WO 2007/118397

(56) References cited:
- WO-A-99/35799
- WO-A2-01/22683
- CN-A- 1 326 281
- CN-A- 1 380 773
- US-A1- 2003 145 082
- US-A1- 2003 223 367
- US-A1- 2003 225 549

## Description

### CROSS REFERENCE TO RELATED APPLICATIONS

This application claims priority of China patent application No. 200610076980.9, filed on April 14, 2006, titled "Method and System for Measuring Network Performance."

### BACKGROUND OF THE INVENTION

### Field of the Technology

The present invention relates to measurement techniques in the communication field, and more particularly to a method and system for measuring network performance.

### Description of the Related Art

With the rapid development of Internet technologies and swift growth of network services, a great demand for network resources has been emerging, and meanwhile the network is becoming more and more complicated. The increasing network subscribers and applications exert heavy burden on the network and cause overloading operations of network equipments, thus affecting the network performance. Therefore, the performance indexes of the network need to be extracted and analyzed to improve the network performance. As a result, the network performance measurement emerges as required. The main purpose of the network performance measurement is discovering network bottlenecks, optimizing network configurations, and further recognizing potential dangers in the network, so as to more efficiently perform the network performance management, provide verification and control of the network service quality, and quantize, compare, and verify the service quality index of the service provider.

The most commonly adopted method for measuring IP network performance can be classified into two categories, namely, active measurement and passive measurement. The active measurement includes employing a measurement tool to purposely and actively generate a measurement flow on a selected measurement point, then injecting the flow into a network, and analyzing the network performance by measuring the transmission condition of a data flow. The passive measurement includes employing a measurement device to monitor a network on a link or device (such as a router or switch) without generating unwanted flows.

The performance measurement can be classified into one-way network performance measurement and two-way network performance measurement in terms of direction. The one-way network performance measurement means measuring the network performance indexes in only one direction from a measurement point A to another measurement point B. The two-way network performance measurement means measuring the network performance indexes from a measurement point A to another measurement point B and then back to the measurement point A. For a communication between two points, the traveling path varies in the to-and-fro directions, or the quality of service (QoS) varies on the same path in the to-and-fro directions, so the one-way network performance is not simply obtained by dividing the two-way delay by two, and in the subsequent descriptions, the network performance measurement is one-way network performance measurement without particular emphasis.

For the current network generally adopting IPv4, in order to solve the problem of insufficient IP address resources, the deployment of network address translation/network address port translation (NAT/NAPT) is very common. As for the passive measurement, a measured flow is captured at the measurement point and added with time stamp information. The data captured at two measurement points is compared to determine the delay of a single packet between the two points and whether the packet is lost. Further, network performance indexes within a certain evaluation interval are deduced according to the above indicators, and the network performance indexes include average delay, maximum delay, minimum delay, delay variation, packet loss ratio, network unavailability, and so on. If the NAPT/NAT exists on an end-to-end path, the inventor discovers the following problem in research. As the NAT/NAPT device may modify the IP address and port number in a packet header, the quintuple that identifies a flow also changes. Thus, the quintuple method cannot be performed on measurement points respectively located in the internal and external networks to determine a measured flow, and it is impossible to carry out the network performance measurement. If it is intended to implement the performance measurement, the two measurement points must obtain the information about the measured flow by certain means. In order to perform an end-to-end performance measurement, the passive measurement scheme must solve the NAPT/NAT traversal problem.

In an IPv4/IPv6 hybrid networking environment, if a network address translation-protocol translation (NAT-PT) technique is adopted to communicate an IPv4 network with an IPv6 network, the mapping between IPv4 addresses and IPv6 addresses is performed on an NAT-PT device, and thus the problem occurring to the NAT/NAPT on network performance measurement also exists.

US 2003/223367 provides systems and methods for identifying and tracking network data packets across a distributed network despite the masking effects of network address translations and other modifications, where network monitoring devices are configured to identify particular data packets or traffic flows at different points in a network by conversation fingerprinting. A equivalency test is then performed between two identifiers from different monitoring devices to determine if the same data packet is received at two or more network monitoring devices. If a match occurs, then the timestamps of the two identifiers are compared to determine the point-to-point network transit latency between the two network monitoring devices.

### SUMMARY OF THE INVENTION

Accordingly, in an embodiment, the present invention is directed to a method and system for measuring network performance, so as to solve the problem in the prior art that the same measured flow could not be located at two sides of a translation device and the network performance could not be passively measured due to the translation of the network address.

The present invention provides a method according to claim 1 for measuring network performance, which includes the following steps:
obtaining, a network address binding relationship of a measured flow from a network address translation (NAT) device located between two devices at respective measurement points;
sending, the network address binding relationship to at least one of the two devices;
configuring, flow description of the measured flow to the two devices;
receiving, packet abstract data of a target packet belonging to the measured flow from the two devices respectively after the two devices extracting the target packet and generating the packet abstract data; and
calculating, network performance indexes according to time stamp information of the packet abstract data received from the two devices;
wherein the two devices extracting the target packet comprises:
   extracting, by the two devices, the target packet employing the flow description and the network address binding relationship; or
   extracting, by one of the two devices, the target packet employing the flow description, and, extracting, by the other of the devices, the target packet employing the flow description and the network address binding relationship.

The present invention further provides a network according to claim 10, which includes a network address translation (NAT) device located between two devices at respective measurement points, adapted to translate a network address and store a network address binding relationship;
a measurement controller, adapted to obtain the network address binding relationship of a measured flow from the NAT device, send the network address binding relationship to at least one of the two device, send flow description of the measured flow to the two devices, receive packet abstract data of a target packet from the two measurement points after at least one of the two devices extracting the target packet employing the network address binding relationship, and calculate network performance indexes according to time stamp information of the received packet abstract data;
the two devices, adapted to extract a target packet of the measured flow, generate and report the packet abstract data of the target packet to the measurement controller,
wherein extract a target packet of the measured flow comprises.
the two devices extract the target packet employing the flow description and the network address binding relationship; or
one of the two devices extracts the target packet employing the flow description and the other of the devices extracts the target packet employing the flow description and the network address binding relationship.

In an embodiment of the present invention, the NAT device obtains and sends the network address binding relationship to the measurement point, so that the measurement points respectively located at two sides of the NAT device obtain the same measured flow, and the network performance can thus be measured. As the measurement points are configured with the network address binding relationship, the scheme provided in an embodiment of the present invention not only supports a passive measurement to be performed on a flow from a private network to a public network, but also a passive measurement to be performed on a flow between two measurement points respectively located in an IPv6 network and an IPv4 network. The packets of all the measured flows have their addresses translated by the NAT device, so the scheme provided in an embodiment of the present invention fully considers the impact on the network performance due to the address translation of the NAPT/NAT.

### BRIEF DESCRIPTION OF THE DRAWING

The present invention will become more fully understood from the detailed description given herein below for illustration only, and thus are not limitative of the present invention, and wherein:
FIG. 1 shows a reference model applied by an NAT in the prior art;
FIG. 2 is a schematic view illustrating an end-to-end measurement in an NAT/NATP environment according to an embodiment of the present invention;
FIG. 3 is a flow chart illustrating processes of a network performance measurement in an NAT/NATP environment according to an embodiment of the present invention; and
FIG. 4 is a schematic view illustrating a network performance measurement between measurement points A and B according to an embodiment of the present invention.

### DETAILED DESCRIPTION OF THE EMBODIMENTS

In an embodiment of the present invention, a network address translation (NAT) device includes a network address translation or network address port translation (NAT/NAPT) device adapted to communicate between a private network and a public network, and a network address translation-protocol translation (NAT-PT) device adapted to communicate between an IPv4 network and an IPv6 network. In the embodiment, a passive measurement on network performance is implemented in a private network and a public network with an NAT device as an example.

The NAT device is adapted to translate an inside IP address used in an internal network into a valid outside IP address, and the obtained IP address can be used on the Internet. There are three types of NAT, namely, static NAT, pooled NAT (also called dynamic NAT), and Network Address port Translation (NAPT). The configuration of the static NAT is the simplest, in which each host in the internal network is permanently mapped into a certain valid address in the external network. The pooled NAT is defining a series of valid addresses in the external network, and mapping the addresses into the internal network through dynamic allocation. The NAPT is mapping internal addresses to different ports at an IP address in the external network. The NAPT can map an internal TCP/IP to multiple ports at an externally registered IP address. In addition, the NAPT may support 64500 connections.

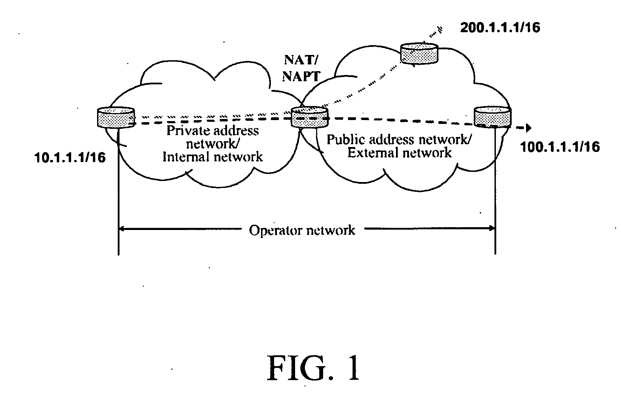

Referring to FIG 1, a network is divided by an NAT/NAPT device into two parts, namely, an internal network and an external network. The internal network adopts a private IP address plan, and the external network adopts a public IP address plan. The internal network and the external network communicate through the NAT/NAPT device. As for the static NAT, the external network may first initiate a communication session to directly access the internal network. For the dynamic NAT or the NAPT, generally the internal network initiates a communication request, next an NAT address mapping table is dynamically established on the NAT/NAPT, and then a normal communication is carried out.

Seen from FIG. 1, if a designated flow intends to traverse through the NAT device, the IP address of the flow will be changed. From the internal network to the external network, the source IP address is changed (the NAT functions to substitute a private IP address with a public IP address). From the external network to the internal network, the destination IP address is changed (the NAT functions to substitute a public IP address with a private IP address). As the IP address is changed, it is impossible for network performance measurement devices respectively deployed in the internal network and the external network to locate the flow, and thus the network performance cannot be measured.

In this embodiment, in order to meet the network performance measurement requirement in the passive measurement to traverse through the NAT/NAPT devi ce, the network address binding relationship is obtained and sent to the measurement point in the external network, so that the measurement point in the external network obtains the same measured flow as the measurement point in the internal network according to the network address binding relationship.

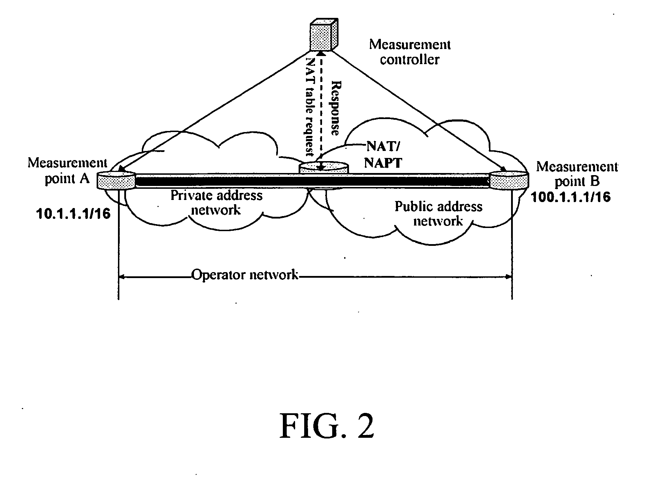

Referring to FIG. 2, the network system includes a measurement controller, a measurement point A located at internal network, a measurement point B located at a public network, and a network address translation (NAT) device for translating network address between the measurement point A and the measurement point B.

The NAT device is adapted to translate network address, i.e., to substitute a private network IP address (source address) in a data packet transmitted by the measurement point A to the measurement point B with an external public network IP address, and substitute an external public network IP address (destination address) in a data packet transmitted by the measurement point B to the measurement point A with a private network IP address.

The measurement controller is adapted to initiate and terminate a network measurement task, configure measurement points, collect measurement data and calculate performance indexes, then report the network performance measurement indexes to the subscriber, and obtain a network address binding relationship (i.e., the mapping relationship between the internal network IP address and the port number and the external network address and the port number) of a measured flow from the NAT device. For example, the measurement point obtains relative information from the NAT management information base (NAT-MIB) through the simple network management protocol (SNMP) or through other protocol interfaces. The configuration of the measurement point includes delivering the description of a measured flow (quintuple), sampling frequency, and sampling algorithm (for example, Poisson distribution).

The measurement point A receives the flow description of a measured flow and the network address binding relationship from the measurement controller, then extracts the measured flow according to the flow description or according to the flow description and the network address binding relationship, and creates a packet ID and a flow ID according to a packet in the flow, generates a packet abstract data according to information such as the packet ID and the flow ID, and finally reports the packet abstract data to the measurement controller. The packet abstract data includes not only the packet ID and flow ID, but also a part of or the whole content of the packet.

The measurement point B receives the flow description of the measured flow and the network address binding relationship from the measurement controller, then extracts the measured flow according to the flow description and the network address binding relationship, and creates a packet ID and a flow ID uniquely identifying a packet according to the content of the packet, generates a packet abstract data according to information such as the packet ID and the flow ID, and finally reports the packet abstract data to the measurement controller. The packet abstract data includes not only the packet ID and flow ID, but also a part of or the whole content of the packet.

During the creation of the packet ID and flow ID by the measurement point A and the measurement point B, if the NAT device translates the address in the packet, substitution must be performed according to the mapping relationship between the IP address and the port number of the internal network and the external network, so as to ensure that the measurement point A and the measurement point B create consistent flow IDs for the same measured flow, and consistent packet IDs for the same packet of the same flow.

The flow ID may also be generated by the measurement controller and informed to the measurement point A and the measurement point B.

Further, the measurement point A and the measurement point B attach the time stamp information to the extracted packet and carry the information in the packet abstract data. The measurement controller compares the packet IDs in the packet information of the same measured flow respectively reported by the measurement point A and the measurement point B, so as to determine the same packet at the measurement point A and the measurement point B. Thereby, a delay index of each packet can be obtained according to the time stamp information. If the packet ID at the upstream measurement point has no corresponding packet ID at the downstream measurement point, it is determined that the packet is lost, and a packet loss ratio is obtained. In practice, a measuring system for network performance has different ways to calculate the network performance indexes, and the present invention is not intended to give any definition.

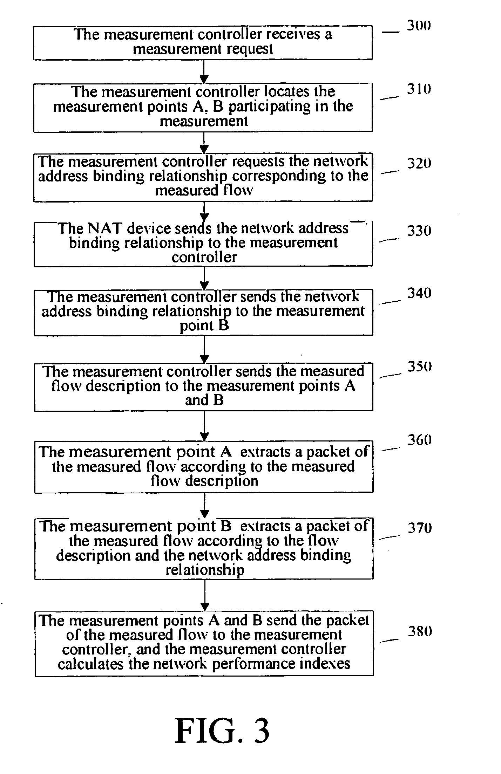

Taking one-way network performance measurement from the measurement point A to the measurement point B for example, referring to FIG. 2 and FIG. 3, the implementation is as follows.

In Step 300, the measurement controller receives a measurement request. The measurement request must include the measured flow description. The flow traverses the border of the NAT/NAPT, and the measurement controller receives a quintuple mixed with the private IP address and the public IP address.

In Step 310, according to the measurement request, the measurement controller locates the measurement points participating in the measurement, i.e., the measurement point A and the measurement point B.

In Step 320, the measurement controller requests the network address binding relationship corresponding to the measured flow from the NAT/NAPT device.

In Step 330, in response to the request of the measurement controller, the NAT/NAPT device sends the requested network address binding relationship to the measurement controller.

In Step 340, the measurement controller sends the network address binding relationship to the measurement point B.

In Step 350, the measurement controller sends the measured flow description to the measurement points A and B.

In Step 360, the measurement point A extracts a packet of the measured flow according to the measured flow description, then creates a flow ID and a packet ID according to the content of the packet and attaches time stamp information to the packet, and finally reports the relative information to the measurement controller.

In Step 370, according to the measured flow description and the network address binding relationship, the measurement point B maps the source address information in the flow description into the translated address information, so as to obtain a translated flow description, then extracts a packet of the measured flow according to the flow description, maps the translated address back to the address before translation, and creates a packet ID according to the content of the packet, and finally attaches time stamp information to the packet.

In Step 380, the measurement point A and the measurement point B send the extracted packet of the measured flow to the measurement controller, and the measurement controller calculates the network performance indexes. The measurement controller determines the same packet of the same measured flow reported by the measurement point A and the measurement point B according to the flow ID and the packet ID, and then calculates the network performance indexes according to the time stamp information.

When reaching the preset measurement time, or fulfilling the measurement task, or an abnormal circumstance occurs, the measurement controller ends the measurement task.

As for the measured flow from the measurement point B to the measurement point A, the difference is that, the measurement point B maps destination address information in the flow description into translated address information according to the network address binding relationship, so as to obtain a translated flow description, and extracts a packet of the measured flow according to the flow description. The rest of the processing is similar to the above, and will not be described herein again.

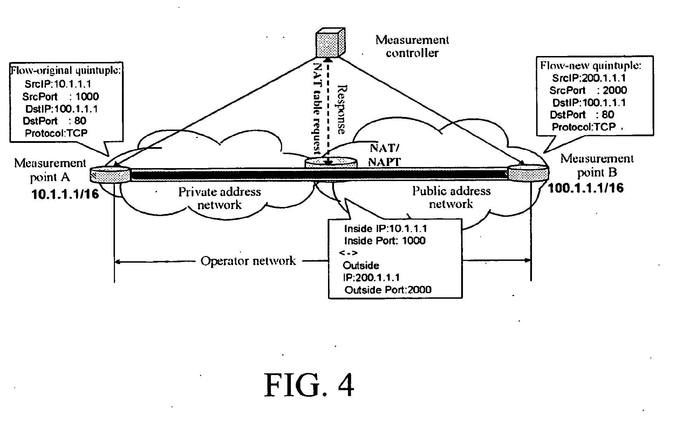

For example, in FIG. 4, the measurement point A and the measurement point B obtain a packet of the same measured flow.

The IP address of the measurement point A is 10.1.1.1, the external public network IP address of the NAT device is 200.1.1.1, and the IP address of the measurement point B is 100.1.1.1.

### A. regarding the measured flow from the measurement point A to the measurement point B

The quintuple measured flow description is: source IP address: 10.1.1.1, source port: 1000, target IP: 100.1.1.1, target port: 80, and protocol: TCP.

In the NAT device, the network address binding relationship of the measured flow is that the inside IP address 10.1.1.1 and the port number 1000 are corresponding to the outside IP address 200.1.1.1 and the port 2000.

On receiving a measurement request, the measurement controller obtains the network address binding relationship from the NAT device and then sends the relationship to the measurement point B. Meanwhile, the measurement controller also sends the measured quintuple description to the measurement points A and B.

The measurement point A extracts a packet of the measured flow according to the flow description. The measurement point B maps the source IP address and port in the flow description into a translated IP address and port according to the network address binding relationship, so as to obtain a corresponding flow description: source IP address 200.1.1.1 and port 2000, target IP address 100.1.1.1 and port 80, and protocol: TCP. Afterward, the packet is extracted according to the flow description, thus ensuring the measurement point A and the measurement point B extract the packet of the same measured flow. During the creation of the packet ID, the measurement point B maps the source IP address 200.1.1.1 and port 2000 in the packet into an IP address 10.1.1.1 and port 1000, and then creates the packet ID in the same manner as the measurement point A. Thereby, it is ensured that the same packet of the same flow has an identical packet ID at the measurement point A and the measurement point B, and the measurement controller is enabled to determine the same packet of the measured flow from the information reported by the measurement point A and the measurement point B.

### B. regarding the measured flow from the measurement point B to the measurement point A

The quintuple measured flow description is: source IP address 100.1.1.1, source port 80, target IP 10.1.1.1, target port 1000, and protocol TCP.

In the NAT device, the network address binding relationship of the measured flow is that the inside IP address 10.1.1.1 and the port number 1000 are corresponding to the outside IP address 200.1.1.1 and the port 2000.

On receiving a measurement request, the measurement controller obtains the network address binding relationship from the NAT device and then sends the relationship to the measurement point B. Meanwhile, the measurement controller also sends the measured quintuple description to the measurement points A and B.

The measurement point A extracts a packet of the measured flow according to the flow description. The measurement point B maps the destination IP address and port in the flow description into an IP address before translation according to the network address binding relationship, so as to obtain a corresponding flow description: source IP address 100.1.1.1 and source port 80, target IP address 200.1.1.1 and target port 2000, and protocol TCP. Afterward, the packet is extracted according to the flow description, thus ensuring the measurement point A and the measurement point B extract the packet of the same measured flow. During the creation of the packet ID, the measurement point B maps the source IP address 200.1.1.1 and port 2000 in the packet into an IP address 10.1.1.1 and port 1000, and then creates the packet ID in the same manner as the measurement point A. Thereby, it is ensured that the same packet of the same flow has identical packet IDs at the measurement point A and the measurement point B, and the measurement controller is enabled to determine the same packet of the measured flow from the information reported by the measurement point A and the measurement point B.

The circumstance that the measurement points A and B are located in an IPv4 network is illustrated above. When a performance measurement task traverses the IPv4 network and the IPv6 network, and the IPv4 and the IPv6 communicate through an NAT-PT device, a packet from the IPv4 network to the IPv6 network passing through the NAT-PT device will have the IPv4 network address of its header (i.e., the source IP address and destination IP address) substituted into an IPv6 network address by the NAT-PT device. The NAT-PT performs a reverse operation on a packet from the IPv6 to the IPv4 network. Therefore, in this environment, the measurement controller configures the network address binding relationship respectively to the two measurement points. The devices at the measurement points respectively located in the IPv4 network and the IPv6 network extract a target packet belonging to the measured flow according to the measured flow description and the address bonding relationship, creates a consistent packet ID for the same packet according to the network address binding relationship, and generates and reports a packet abstract data according to the flow ID and the packet ID. The processing is similar to the above, and will not be described herein again.

In view of the above, the NAT device obtains and sends the network address binding relationship to the measurement points, so that the measurement points respectively located at two sides of the NAT device obtain the same measured flow, and the network performance can thus be measured. As the measurement point is configures with the network address binding relationship, the scheme provided in an embodiment of the present invention not only supports a passive measurement to be performed on a flow from a private network to a public network, but also a passive measurement to be performed on a flow between two measurement points respectively located in an IPv6 network and an IPv4 network. The packets of all the measured flows have their addresses translated by the NAT device, so the scheme provided in an embodiment of the present invention fully considers the impact on the network performance due to the address translation of the NAPT/NAT.

Apparently, those in the art can make modifications and variations without departing from scope of the present invention. And equivalent modifications and variations made based on the claims of the present invention also fall within the scope of the present invention.

## Claims

1. A method for performing passive measurement on network performance, **characterized by** comprising:
obtaining a network address binding relationship of a measured flow from a network address translation, NAT, device located between two devices at respective measurement points;
sending the network address binding relationship to at least one of the two devices;
sending a flow description of the measured flow to the two devices;
receiving packet abstract data of a target packet belonging to the measured flow from the two devices respectively after the two devices extracting the target packet and generating the packet abstract data according to the target packet; and
calculating network performance indexes according to time stamp information of the packet abstract data received from the two devices;
wherein the two devices extracting the target packet comprises:
extracting, by the two devices, the target packet employing the flow description and the network address binding relationship; or
extracting, by one of the two devices, the target packet employing the flow description, and, extracting, by the other of the devices, the target packet employing the flow description and the network address binding relationship.

2. The method according to claim 1, further comprising:
receiving a measurement request including the flow description of the measured flow.

3. The method according to claim 1, further comprising:
locating the two measurement points participating in the measurement.

4. The method according to any one of claims 1 to 3, wherein generating the packet abstract data according to the target packet comprises:
creating, by the two devices, a packet ID of the target packet according to the content of the target packet respectively;
generating, by the two devices, the packet abstract data, according to flow ID of the measured flow and the packet ID of the target packet by the two devices individually;
wherein consistent flow IDs the flow ID of the measured flow are generated by the two devices according to the content of the target packet.

5. The method according to any one of claims 1 to 4, wherein
the two devices further attach time stamp information to the target packet, and carry the time stamp information in the packet abstract data.

6. The method according to any one of claims 1 to 5, wherein the network address binding relationship is sent to one of the devices, said device extracts the target packet belonging to the measured flow according to the flow description and the network address binding relationship, and the other device extracts the target packet belonging to the measured flow according to the flow description.

7. The method according to any one of claims 1 to 5, wherein the network address binding relationship is respectively sent to the two devices, and the two devices extract the target packet belonging to the measured flow respectively according to the flow description and the network address binding relationship.

8. The method according to claim 6 or 7, wherein after mapping the address in the target packet according to the network address binding relationship, the device obtaining the network address binding relationship generates a packet ID for the target packet in the same manner as the other device.

9. The method according to any one of the preceding claims, wherein the two measurement points are respectively located in a private network and a public network, or respectively located in an IPv6 network and an IPv4 network.

10. A network system, comprising:
a network address translation, NAT, device located between two devices at respective measurement points, adapted to translate a network address and store a network address binding relationship;
a measurement controller, adapted to obtain the network address binding relationship of a measured flow from the NAT device, send the network address binding relationship to at least one of the two device, send flow description of the measured flow to the two devices, receive packet abstract data of a target packet from the two devices after at least one of the two devices extracting the target packet employing the network address binding relationship, and calculate network performance indexes according to time stamp information of the received packet abstract data;
the two devices, adapted to extract a target packet of the measured flow, generate and report the packet abstract data of the target packet to the measurement controller,
wherein the extraction of a target packet of the measured flow comprises :
the two devices extract the target packet employing the flow description and the network address binding relationship; or
one of the two devices extracts the target packet employing the flow description and the other of the devices extracts the target packet employing the flow description and the network address binding relationship.

11. The network system according to claim 10, wherein the two devices are further adapted to attach a time stamp to the target packet, and carry the time stamp in the packet abstract data.

12. The network system according to claim 10, wherein after mapping the address in the target packet according to the network address binding relationship, one of the two devices generates a packet ID in the same manner as the other device.

13. The network system according to any one of claims 10 to 12, wherein the two devices are respectively located in a private network and a public network, or respectively located in an IPv6 network and an IPv4 network.

14. The network system according to any one of claims 10 to 12, wherein:
the packet abstract data are generated according to flow ID of the measured flow and packet ID of the target packet by the two devices individually;
the packet ID of the target packet are created according to the content of the target packet by the two devices respectively;
consistent flow IDs of the measured flow are generated by the two devices according to the content of the target packet.

## Patentansprüche

1. Verfahren zum Durchführen einer passiven Messung der Netzwerk-Leistungsfähigkeit, **gekennzeichnet durch** die folgenden Schritte:
Erhalten einer Netzwerkadressen-Bindebeziehung eines gemessenen Flusses aus einer Einrichtung der Netzwerkadressenübersetzung NAT, die sich zwischen zwei Einrichtungen an jeweiligen Messpunkten befindet;
Senden der Netzwerkadressen-Bindebeziehung zu mindestens einer der zwei Einrichtungen;
Senden einer Flussbeschreibung des gemessenen Flusses zu den zwei Einrichtungen;
Empfangen von Paketzusammenfassungsdaten eines zu dem gemessenen Fluss gehörenden Zielpakets von den zwei Einrichtungen jeweils nachdem die zwei Einrichtungen das Zielpaket extrahieren und die Paketzusammenfassungsdaten gemäß dem Zielpaket erzeugen; und
Berechnen von Netzwerkleistungsfähigkeitsindices gemäß Zeitstempelinformationen der von den zwei Einrichtungen empfangenen Paketzusammenfassungsdaten;
wobei das Extrahieren des Zielpakets **durch** die zwei Einrichtungen Folgendes umfasst:
die zwei Einrichtungen extrahieren das Zielpaket unter Verwendung der Flussbeschreibung und der Netzwerkadressen-Bindebeziehung; oder
eine der zwei Einrichtungen extrahiert das Zielpaket unter Verwendung der Flussbeschreibung und die andere der Einrichtungen extrahiert das Zielpaket unter Verwendung der Flussbeschreibung und der Netzwerkadressen-Bindebeziehung.

2. Verfahren nach Anspruch 1, ferner mit dem folgenden Schritt:
Empfangen einer Messungsanforderung, die eine Flussbeschreibung des gemessenen Flusses enthält.

3. Verfahren nach Anspruch 1, ferner mit dem folgenden Schritt:
Finden der zwei an der Messung teilnehmenden Messpunkte.

4. Verfahren nach einem der Ansprüche 1 bis 3, wobei das Erzeugen der Paketzusammenfassungsdaten gemäß dem Zielpaket Folgendes umfasst:
die zwei Einrichtungen erzeugen eine Paket-ID des Zielpakets jeweils gemäß dem Inhalt des Zielpakets;
die zwei Einrichtungen erzeugen die Paketzusammenfassungsdaten gemäß der Fluss-ID des gemessenen Flusses und der Paket-ID des Zielpakets individuell durch die zwei Einrichtungen;
wobei stimmige Fluss-IDs des gemessenen Flusses durch die zwei Einrichtungen gemäß dem Inhalt des Zielpakets erzeugt werden.

5. Verfahren nach einem der Ansprüche 1 bis 4, wobei
die zwei Einrichtungen ferner Zeitstempelinformationen an das Zielpaket anhängen und die Zeitstempelinformationen in den Paketzusammenfassungsdaten führen.

6. Verfahren nach einem der Ansprüche 1 bis 5, wobei die Netzwerkadressen-Bindebeziehung zu einer der Einrichtungen gesendet wird, wobei die Einrichtung das zu dem gemessenen Fluss gehörende Zielpaket gemäß der Flussbeschreibung und der Netzwerkadressen-Bindebeziehung extrahiert und die andere Einrichtung das zu dem gemessenen Fluss gehörende Zielpaket gemäß der Flussbeschreibung extrahiert.

7. Verfahren nach einem der Ansprüche 1 bis 5, wobei die Netzwerkadressen-Bindebeziehung jeweils zu den zwei Einrichtungen gesendet wird und die zwei Einrichtungen das zu dem gemessenen Fluss gehörende Zielpaket jeweils gemäß der Flussbeschreibung und der Netzwerkadressen-Bindebeziehung extrahieren.

8. Verfahren nach Anspruch 6 oder 7, wobei nach dem Abbilden der Adresse in dem Zielpaket gemäß der Netzwerkadressen-Bindebeziehung die die Netzwerkadressen-Bindebeziehung erhaltende Einrichtung auf dieselbe Weise wie die andere Einrichtung eine Paket-ID für das Zielpaket erzeugt.

9. Verfahren nach einem der vorhergehenden Ansprüche, wobei die zwei Messpunkte jeweils in einem privaten Netzwerk und in einem öffentlichen Netzwerk angeordnet sind oder jeweils in einem IPv6-Netzwerk und in einem IPv4-Netzwerk angeordnet sind.

10. Netzwerksystem, umfassend:
eine Einrichtung der Netzwerkadressenübersetzung NAT, die sich zwischen zwei Einrichtungen an jeweiligen Messpunkten befindet, die dafür ausgelegt ist, eine Netzwerkadresse zu übersetzen und eine Netzwerkadressen-Bindebeziehung zu speichern;
eine Messungssteuerung, die dafür ausgelegt ist, die Netzwerkadressen-Bindebeziehung eines gemessenen Flusses von der NAT-Einrichtung zu erhalten, die Netzwerkadressen-Bindebeziehung zu mindestens einer der zwei Einrichtungen zu senden, eine Flussbeschreibung des gemessenen Flusses zu den zwei Einrichtungen zu senden, Paketzusammenfassungsdaten eines Zielpakets von den zwei Einrichtungen zu empfangen, nachdem mindestens eine der zwei Einrichtungen das Zielpaket unter Verwendung der Netzwerkadressen-Bindebeziehung extrahiert, und gemäß Zeitstempelinformationen der empfangenen Paketzusammenfassungsdaten Netzwerkleistungfähigkeitsindices zu berechnen;
die zwei Einrichtungen, die dafür ausgelegt sind, ein Zielpaket des gemessenen Flusses zu extrahieren und die Paketzusammenfassungsdaten des Zielpakets zu erzeugen und an die Messungssteuerung zu melden;
wobei die Extraktion eines Zielpakets des gemessenen Flusses Folgendes umfasst:
die zwei Einrichtungen extrahieren das Zielpaket unter Verwendung der Flussbeschreibung und der Netzwerkadressen-Bindebeziehung; oder
eine der zwei Einrichtungen extrahiert das Zielpaket unter Verwendung der Flussbeschreibung und die andere der Einrichtungen extrahiert das Zielpaket unter Verwendung der Flussbeschreibung und der Netzwerkadressen-Bindebeziehung.

11. Netzwerksystem nach Anspruch 10, wobei die zwei Einrichtungen ferner dafür ausgelegt sind, einen Zeitstempel an das Zielpaket anzuhängen und den Zeitstempel in den Paketzusammenfassungsdaten zu führen.

12. Netzwerksystem nach Anspruch 10, wobei nach dem Abbilden der Adresse in dem Zielpaket gemäß der Netzwerkadressen-Bindebeziehung eine der zwei Einrichtungen auf dieselbe Weise wie die andere Einrichtung eine Paket-ID erzeugt.

13. Netzwerksystem nach einem der Ansprüche 10 bis 12, wobei die zwei Einrichtungen jeweils in einem privaten Netzwerk und in einem öffentlichen Netzwerk angeordnet sind oder jeweils in einem IPv6-Netzwerk und in einem IPv4-Netzwerk angeordnet sind.

14. Netzwerksystem nach einem der Ansprüche 10 bis 12, wobei die Paketzusammenfassungsdaten gemäß der Fluss-ID des gemessenen Flusses und der Paket-ID des Zielpakets durch die zwei Einrichtungen individuell erzeugt werden;
die Paket-ID des Zielpakets gemäß dem Inhalt des Zielpakets jeweils durch die zwei Einrichtungen erzeugt wird;
stimmige Fluss-IDs des gemessenen Flusses durch die zwei Einrichtungen gemäß dem Inhalt des Zielpakets erzeugt werden.

## Revendications

1. Procédé de prise de mesures passive de performances réseau, **caractérisé en ce qu'**il comprend :
l'obtention d'une relation liante d'adresse réseau d'un flux mesuré auprès d'un dispositif de traduction d'adresse réseau, NAT, situé entre deux dispositifs à des points de mesure respectifs ;
l'envoi de la relation liante d'adresse réseau à au moins l'un des deux dispositifs ;
l'envoi d'une description de flux du flux mesuré aux deux dispositifs ;
la réception de données d'extrait de paquet d'un paquet cible appartenant au flux mesuré en provenance des deux dispositifs respectivement après que les deux dispositifs ont extrait le paquet cible et généré les données d'extrait de paquet en fonction du paquet cible ; et
le calcul d'indices de performances réseau en fonction d'informations d'horodatage des données d'extrait de paquet reçues des deux dispositifs ;
dans lequel l'extraction par les deux dispositifs du paquet cible comprend :
l'extraction, par les deux dispositifs, du paquet cible en employant la description de flux et la relation liante d'adresse réseau ; ou
l'extraction, par l'un des deux dispositifs, du paquet cible en employant la description de flux, et l'extraction, par l'autre des deux dispositifs du paquet cible en employant la description de flux et la relation liante d'adresse réseau.

2. Procédé selon la revendication 1, comprenant en outre :
La réception d'une requête de mesure comprenant la description de flux du flux mesuré.

3. Procédé selon la revendication 1, comprenant en outre :
la localisation des deux points de mesure participant à la mesure.

4. Procédé selon l'une quelconque des revendications 1 à 3, dans lequel la génération des données d'extrait de paquet en fonction du paquet cible comprend :
la création, par les deux dispositifs, d'une ID de paquet du paquet cible en fonction du contenu du paquet cible respectivement ;
la génération, par les deux dispositifs, des données d'extrait de paquet, en fonction de l'ID de flux du flux mesuré et de l'ID de paquet du paquet cible par les deux dispositifs individuellement ;
dans lequel des ID de flux cohérentes du flux mesuré sont générées par les deux dispositifs en fonction du contenu du paquet cible.

5. Procédé selon l'une quelconque des revendications 1 à 4, dans lequel
les deux dispositifs attachent en outre des informations d'horodatage au paquet cible, et acheminent les informations d'horodatage dans les données d'extrait de paquet.

6. Procédé selon l'une quelconque des revendications 1 à 5, dans lequel la relation liante d'adresse réseau est envoyée à l'un des dispositifs, ledit dispositif extrait le paquet cible appartenant au flux mesuré en fonction de la description de flux et de la relation liante d'adresse réseau, et l'autre dispositif extrait le paquet cible appartenant au flux mesuré en fonction de la description de flux.

7. Procédé selon l'une quelconque des revendications 1 à 5, dans lequel la relation liante d'adresse réseau est envoyée respectivement aux deux dispositifs, et les deux dispositifs extraient le paquet cible appartenant au flux mesuré en fonction de la description de flux et de la relation liante d'adresse réseau respectivement.

8. Procédé selon la revendication 6 ou 7, dans lequel après la mise en correspondance de l'adresse dans le paquet cible en fonction de la relation liante d'adresse réseau, le dispositif obtenant la relation liante d'adresse réseau génère une ID de paquet pour le paquet cible de la même manière que l'autre dispositif.

9. Procédé selon l'une quelconque des revendications précédentes, dans lequel les deux points de mesure sont respectivement situés dans un réseau privé et un réseau public, ou sont respectivement situés dans un réseau IPv6 et un réseau IPv4.

10. Système de réseau comprenant :
un dispositif de traduction d'adresse réseau, NAT, situé entre deux dispositifs à des points de mesure respectifs, adapté pour traduire une adresse réseau et mémoriser une relation liante d'adresse réseau ;
une unité de commande de mesure, adaptée pour obtenir la relation liante d'adresse réseau d'un flux mesuré auprès du dispositif NAT, envoyer la relation liante d'adresse réseau à au moins l'un des deux dispositifs, envoyer une description de flux du flux mesuré aux deux dispositifs, recevoir des données d'extrait de paquet d'un paquet cible en provenance des deux dispositifs après qu'au moins l'un des deux dispositifs a extrait le paquet cible en employant la relation liante d'adresse réseau, et calculer des indices de performances réseau en fonction d'informations d'horodatage des données d'extrait de paquet reçues ;
les deux dispositifs, adaptés pour extraire un paquet cible du flux mesuré, générer et communiquer les données d'extrait de paquet du paquet cible à l'unité de commande de mesure ;
dans lequel l'extraction d'un paquet cible du flux mesuré comprend :
l'extraction, par les deux dispositifs, du paquet cible en employant la description de flux et la relation liante d'adresse réseau ; ou
l'extraction, par l'un des deux dispositifs, du paquet cible en employant la description de flux, et l'extraction, par l'autre des deux dispositifs du paquet cible en employant la description de flux et la relation liante d'adresse réseau.

11. Système de réseau selon la revendication 10, dans lequel les deux dispositifs sont adaptés en outre pour attacher des informations d'horodatage au paquet cible, et acheminer les informations d'horodatage dans les données d'extrait de paquet.

12. Système de réseau selon la revendication 10, dans lequel après la mise en correspondance de l'adresse dans le paquet cible en fonction de la relation liante d'adresse réseau, l'un des deux dispositifs génère une ID de paquet de la même manière que l'autre dispositif.

13. Système de réseau selon l'une quelconque des revendications 10 à 12, dans lequel les deux dispositifs sont respectivement situés dans un réseau privé et un réseau public, ou sont respectivement situés dans un réseau IPv6 et un réseau IPv4.

14. Système de réseau selon l'une quelconque des revendications 10 à 12, dans lequel :
les données d'extrait de paquet sont générées en fonction de l'ID de flux du flux mesuré et de l'ID de paquet du paquet cible par les deux dispositifs individuellement ;
l'ID de paquet du paquet cible est créée en fonction du contenu du paquet cible par les deux dispositifs respectivement ;
des ID de flux cohérentes du flux mesuré sont générées par les deux dispositifs en fonction du contenu du paquet cible.
